(19) Europäisches Patentamt
European Patent Office
Office européen des brevets

(11) Publication number: 0 294 423 B1

## (12) EUROPEAN PATENT SPECIFICATION

(45) Date of publication of patent specification :
03.07.91 Bulletin 91/27

(51) Int. Cl.⁵ : **B32B 3/12, B64G 1/44,
B64G 1/00, B64C 3/20**

(21) Application number : 88900284.6

(22) Date of filing : 20.11.87

(86) International application number :
PCT/US87/03018

(87) International publication number :
WO 88/04607 30.06.88 Gazette 88/14

(54) HONEYCOMB FACESHEET MATERIAL AND HONEYCOMB MADE THEREWITH.

(30) Priority : 19.12.86 US 943470

(43) Date of publication of application :
14.12.88 Bulletin 88/50

(45) Publication of the grant of the patent :
03.07.91 Bulletin 91/27

(84) Designated Contracting States :
DE FR GB IT SE

(56) References cited :
EP-A- 0 136 096
GB-A- 1 311 202
US-A-36 910 00

(73) Proprietor : Hughes Aircraft Company
7200 Hughes Terrace P.O. Box 45066
Los Angeles, California 90045-0066 (US)

(72) Inventor : DUPONT, Preston, S.
9046 Bertrand Avenue
Northridge, CA 91325 (US)
Inventor : RITTER, Robert, E.
741 Cloyden Road
Palos Verdes Estates, CA 90274 (US)
Inventor : McGRATH, Brian, A.
122 Belmont
Long Beach, CA 90803 (US)
Inventor : SCHAFFER, Brent, G.
2913 Perkins Lane
Redondo Beach, CA 90278 (US)
Inventor : FOUTS, Kenneth, A., III
1017 South Sunshine Street, Apt. E
El Cajon, CA 92020 (US)
Inventor : STAFFORD, John, P.
218 San Clemente Lane
Placentia, CA 92670 (US)

(74) Representative : Witte, Alexander, Dr.-Ing.
Witte, Weller & Hilgenfeldt Patent- und
Rechtsanwälte Augustenstrasse 7
W-7000 Stuttgart 1 (DE)

## Description

The invention relates to a honeycomb facesheet material, comprising :
– a woven graphite cloth having interwoven graphite fibers of an average spacing between fibers of at least the diameter of the fibers ; and
– a sheet adhered to said cloth, said cloth and said sheet being impregnated with a curable adhesive.

The invention, further, relates to a stiffened honeycomb material, comprising :
– a piece of metallic honeycomb material ;
– a sheet bonded to one face of said honeycomb ; and
– a woven graphite cloth having woven graphite fibers of an average spacing between fibers of at least of the diameter of the fibers, said cloth being bonded to said sheet by means of an adhesive.

The invention, further, relates to a method of manufacturing a honeycomb facesheet material and methods of manufacturing a stiffened honeycomb material.

A material and a method of this kind are known from EP-A-0 136 096.

Structural materials used in spacecraft and structures built in space must be stiff, strong and extremely lightweight. The cost of raising one pound of weight from the earth to orbit is many thousands of dollars, and therefore great savings and increased payloads can be secured by precisely engineering structural materials to meet the required mechanical properties with minimum weight.

In some spacecraft applications, high structural stiffness at particular locations is required. Structural vibrations are induced in the spacecraft structural components. The amplitudes of the vibrations are dependent upon their frequencies, which in turn depend in part upon the stiffness of the structure. If the amplitudes become too high, they can destroy the structure. The stiffness can be expressed in terms of the modulus of elasticity, a material property defined as the elastic stress divided by the elastic strain. To control the vibrations, the stiffness of the structure can be precisely controlled, within the limitation that the weight must be minimized.

Many spacecraft utilize solar cells for generating electrical power. The solar cells are typically thin plates that must be mounted upon an underlying solar panel structure for support. One approach to fabricating the underlying solar panel structure is to use a lightweight aluminum honeycomb substrate with a facesheet bonded to the open end of the honeycomb to stiffen the honeycomb and to receive the solar cells. Such a material can be tailored to a specific stiffness that is resistant to development of destructive vibrations in solar panels.

The aluminum honeycomb material is fabricated to a repeating cellular morphology similar to that of the familiar honeycomb of honeybees, except that the cell walls of the manmade material are of aluminum or other lightweight material. The cell walls are arranged in a hexagonal cellular pattern for geometric compatibility and strength. Typically, the cell walls are a lightweight aluminum alloy, such as 5056 aluminum about .0007 inches (0,0178 mm) thick, and the maximum cross-sectional dimension of each cell is about 3/8 inch (9,53 mm). Such materials are commercially available in various thicknesses, and 1/2 inch (12,7 mm) thick pieces are often used in spacecraft solar panel construction.

The facesheet can be any of several materials. Most commonly, the facesheet is a tightly woven fabric of a synthetic fiber, such as KEVLAR (KEVLAR is a registered trade mark of the DUPONT Company), having a high modulus of elasticity so that the facesheet and the honeycomb/facesheet structure are stiffened. While such structures do provide the necessary support and high stiffness, it would be desirable to find an alternative approach to the support structure that would have equivalent or improved structural properties, with even lower weight.

From EP-A 0 136 096, mentioned at the outset, a method of making a honeycomb structure is known, which uses a composite prepreg consisting of woven graphite fibers being embedded in a relatively thick layer of resin having a thickness of several mm.

In order to attach the prepreg to an open face of a honeycomb material, several non-contiguous fillets of less than totally cured adhesive are formed on the faying surfaces of the honecomb cores and, subsequently, a scrim cloth is placed on the fillets and bonded thereto. Finally, the prepreg is placed on the scrim cloth and cured thereto.

The prior art method, also providing a facesheet on the open end of the honeycomb structure with the facesheet finally consisting of a scrim cloth and a woven graphite cloth, has the following disadvantages :

First, providing individual non-contiguous fillets on the faying surfaces of the honeycomb cores, is an extremely difficult procedure because the open face of a honeycomb structure that is to be stiffened by a facesheet may have hundreds or thousands of cores so that an equivalent number of fillets have to be inserted into the open ends of the cores.

Second, by bonding the facesheet to the honeycomb material only via the fillets of reduced diameter, the load-transfer between the honeycomb structure and the facesheet is imperfect.

Third, the known method calls for a resin layer having a thickness of several mm and, therefore, a considerable weight.

Document GB-A-1 311 202 describes a composite material structural article consisting of a carbon fiber fabric being placed directly on the open end of a honeycomb structure without any intermediate layer or sheet therebetween.

Document US-A-3 691 000 describes a glass-fiber reinforced composite article exhibiting enhanced longitudinal tensile and compressive moduli. The composite articles comprise a resinuous matrix material which has incorporated therein substantially parallel hybrid fibers reinforcing laminate in an appropriate concentration. Laminae of relatively high modulus carbon fiber simultaneously serve as fibrous reinforcement in conjunction with laminae of glass-fiber. Therefore, this prior art article has a considerable weight and cannot be used for spacecraft purposes.

Accordingly, there exists a need for an improved lightweight structural material having high, controllable stiffness, dimensional stability, and reduced weight compared with existing materials.

It is, therefore, an object of the invention to provide a honeycomb facesheet material, a stiffened honeycomb material and methods to produce same which provide materials of substantially lesser weight with unreduced mechanical stability and without the need to use complicated manufacturing processes.

According to the honeycomb facesheet material and the stiffened honeycomb material, mentioned at the outset, this object is achieved in that said sheet consists of a graphite paper and that said adhesive is distributed over said cloth and said graphite paper in a quantity of between 80,9 and 87,6 g/m².

According to the method of manufacturing a honeycomb facesheet material, mentioned at the outset, this object is achieved by the steps of :

– placing a woven graphite cloth having about four fibers per cm in each direction perpendicular to said fibers in the plane of said cloth, the modulus of elasticity of said fibers being from about 483-552 kN/mm², on a layer of graphite paper having a weight of about 10,1 g/m² ;

– impregnating said graphite paper and said graphite cloth placed thereon with an epoxy resin in quantity of between 80,9 and 87,6 g/m² ; and

– curing said epoxy resin at a temperature of 177°C and a pressure of between about 0,138 and 0,345 bar for a period of about two hours to generate a composite facesheet.

According to the method of manufacturing a stiffened honeycomb material, mentioned at the outset, the object may be alternatively achieved by the steps of :

– placing a woven graphite cloth having about four fibers per cm in each direction perpendicular to said fibers in the plane of said cloth, the modulus of elasticity of said fibers being from about 483-552 kN/mm², on a layer of graphite paper having a weight of about 10,1 g/m² ;

– impregnating said graphite paper and said graphite cloth placed thereon with an epoxy resin in quantity of between 80,9 and 87,6 g/m² ;

– curing said epoxy resin at a temperature of 177°C and a pressure of between about 0,138 and 0,345 bar for a period of about two hours to generate a composite facesheet ;

– placing a layer of adhesive between the cured facesheet and exposed portions of cell walls of a honeycomb material ;

– joining the facesheet to the honeycomb material ; and

– curing the adhesive ;

or the steps of :

– placing a woven graphite cloth having about four fibers per cm in each direction perpendicular to said fibers in the plane of said cloth, the modulus of elasticity of the said fibers being from about 483-552 kN/mm², and a layer of graphite paper having a weight of about 10,1 g/m² on exposed portions of cell walls of a honeycomb material ;

– impregnating said graphite paper and said graphite cloth placed thereon with an epoxy resin in a quantity of between 80,9 and 87,6 g/m²,

– curing said epoxy resin at a temperature of 177°C and a pressure of between about 0,138 and 0,345 bar for a period of about 2 hours to bond the cloth and the paper together as a composite facesheet and to simultaneously bond the facesheet to the exposed portion of the cell walls essentially along their entire lengths.

The present invention is embodied in a facesheet material for use with metallic honeycomb structures. The facesheet has high, controllable elastic modulus, low coefficient of thermal expansion, good dimensional stability and reduced weight as compared with prior facesheet materials. The facesheet is particularly structured for use with honeycomb substrates, to enhance bonding of the stiffening elements to the honeycomb.

In accordance with the invention, a honeycomb facesheet material comprises a woven graphite cloth having interwoven graphite fibers of an average spacing between fibers of at least the diameter of the fibers ; and a piece of graphite paper adhered to said graphite cloth, said cloth and said graphite paper being impregnated with a curable adhesive.

The graphite fibers preferably have a diameter of about .020 inches (0,508 mm), and a spacing between fibers of about 0.080 inches (2,03 mm). Thus, the fibers are arranged in an open weave of about 10 fiber ends per inch (4 fiber ends per cm). The fibers preferably are of high modulus, as in the order of about 70 million pounds per square inch (483 kN/mm²). Because the cross-sectional dimension of each cell of the honeycomb (e.g., .375 inches (9,53 mm)) is large and the spacing between fibers (e.g., .080 inches (2,03 mm)) is extreme, the fibers of the cloth would not readily bond to the cell walls over a large fraction of their lengths, in the absence of the graphite paper. Indeed, only a small fraction of the fiber length would contact the ends of the cell walls in the absence of the graphite paper, so that load transfer between the cell walls and the fibers would be incomplete, resulting in poor mechanical properties.

The graphite paper between the graphite cloth and the honeycomb material therefore performs several important functions. The paper is a bonding element that aids in achieving full bonding of the fibers of the open-weave cloth to the thin cell walls. The graphite paper prevents the cell walls of the honeycomb from cutting or otherwise damaging the fibers. The graphite paper assists in supporting the open-weave cloth structure during fabrication, transport and application to the honeycomb, preventing misalignment of the spaced graphite fibers and unraveling of the cloth.

Unlike the prior art structure of Document EP-A-0 136 096 the stiffened honeycomb material of this invention is fully connected to the open cell wall ends over their entire circumference and not only to singular non-contiguous fillets of adhesive material which establish only a point-contact between the facesheet and the honeycomb material.

The graphite paper used in this invention is preferably a commercial product purchased as CELION (CELION is a registered trade mark) brand GY70SE carbon fiber. The fiber is then woven into the desired cloth. The graphite paper is preferably a commercial product purchased from International Paper Company in weights of from about 0.2 to about 2.0 ounces per square yard (6,74 to 67,4 g/m²), most preferably 0.3 ounches per square yard (10,1 g/m²). The graphite paper is formed of pressed graphite fibers having lengths typically of about 0.75 to about 1.0 inch (19,1 to about 25,4 mm).

The flexural modulus of a honeycomb having the facesheet of the invention is typically about 40% greater than obtained using a single-ply facesheet of KEVLAR. The weight of the facesheet is about 25% less using the graphite cloth/graphite paper two-ply approach of the present invention, instead of the single-ply KEVLAR approach. Thus, it is expected that a reduction in weight of about 20-30 pounds (9,08-13,6 kg) can be achieved by using the present facesheet material and honeycomb structure in a Hughes Aircraft Company HS-393 communications satellite.

Another advantage of this invention resides in the fact that the paper being fabricated of a graphite, is chemically compatible with the graphite cloth, has about the same low coefficient of thermal expansion to reduce thermal mismatch stresses and strains upon heating and cooling, and has the same low density. This is very much unlike the structure disclosed in Document EP-A-0 136 096 which uses distinct materials for the cloth and the intermediate sheet, namely a cloth of metal, graphite or fiber glass fibers in connection with a scrim cloth of NYLON or DACRON (NYLON and DACRON are registered trade marks). The reason for using such scrim cloth is that scrim cloth acts as a barrier to prevent the unwanted flow of resin along the honeycomb walls whereas no attention at all was paid to the question of chemical compatibility.

Another most important advantage of this invention is that the lowest possible weight is achieved by using only a minimum of curable adhesive to manufacture the facesheet or the stiffened honeycomb material. The amount of adhesive used was exactly set to secure the cloth on the upper side of the graphite paper and, further, to attach the graphite paper on the open ends of the honeycomb material (in the case of the stiffened honeycomb material) essentially along the entire length of the cell walls. In order to do so, an amount of adhesive in the order of 2.4 to about 2.6 ounces per square yard (80,9 to about 87,6 g/m²) is entirely sufficient. This amount corresponds to an equivalent adhesive layer thickness of about 1/10 of a mm and, therefore, two orders of magnitude less than disclosed in Document EP-A-0 136 096.

It will now be apparent that the facesheet and reinforced honeycomb of the present invention provide an important advance in the art of stiff, lightweight structural materials for use in spacecraft. Higher stiffness, better dimensional stability, and lighter weight are obtained by using the present two-ply approach in place of the prior single-ply approach. Other features and advantages of the present invention will be apparent from the following more detailed description, taken in conjunction with the accompanying drawings, which description illustrates, by way of example, the principles of the invention.

Fig. 1     is a side-sectional view of a facesheet of the invention ;

Fig. 2     is a top-plan view, with layers progressively stripped away to illustrate their relation, of a honeycomb reinforced with the facesheet of the invention ; and

Fig. 3    is a side-sectional view of a honeycomb reinforced with the facesheet of the invention.

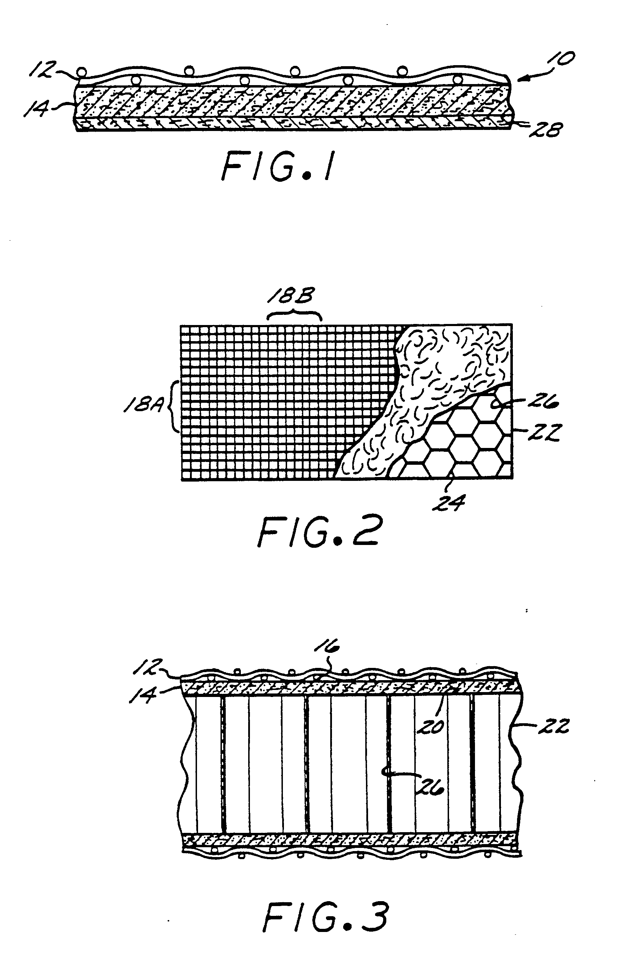

As illustrated in Figs. 1 and 2, a facesheet 10 includes a layer of woven graphite cloth 12 and a layer of graphite paper 14 adhered thereto. The graphite cloth is an open weave of graphite fibers 16, each of a diameter of about .020 inches (0,508 mm). The fibers 16 are spaced about .080 inches (2,03 mm) apart, so that the centers of the fibers are about .100 inches (2,54 mm) apart. The weave is formed of two sets 18 of fibers 16, with all of the fibers 16 in each set 18 substantially parallel to each other, and one of the sets 18a disposed at 90 degrees to the other set 18b. In each direction perpendicular to the fiber sets 18 but in the plane of the cloth 12, there are about ten fiber ends per inch (four fiber ends per cm). This type of weave of cloth 12, wherein the fibers 16 are spaced apart laterally by a distance larger than their diameters, is termed an open weave. A common example of an open weave is screening used on windows and doors. In a closed weave, by contrast, the fibers are closely spaced together without much lateral spacing therebetween. A common example of a closed weave is the cloth used in clothing.

The fibers 16 and the cloth 12 are graphite, a form of carbon. Each fiber 16 in turn is a bundle or tow of filaments of graphite, with typically about 384 filaments bundled to form each fiber 16. The fibers 16 have a high modulus of elasticity, in the order of about 70 to about 80 million pounds per square inch (483 to about 552 kN/mm²). Such fibers are commercially available as CELION Brand GY70SE carbon fibers. They are woven into the desired open weave cloth 12 on weaving machines generally similar to those used to manufacture cotton cloth used in clothing.

The use of an open weave graphite cloth 12 is important to the present invention. The cloth 12 having ten ends per inch (four ends per cm) of GY70SE graphite fiber is found to yield the desired high stiffness to the facesheet 10.

The graphite paper 14 is a pressed mass of graphite fibers, each typically about 0.75 to about 1.00 inch (19,1 to about 25,4 mm) long. The thickness of the graphite paper is about 0.003 inches (0.0762 mm). The graphite paper is manufactured in a manner similar to the more familiar paper made from wood pulp, so that the graphite fibers are generally randomly oriented in the plane of the paper 14. Graphite paper 14 can be manufactured in a range of weights, and is available commercially from International Paper Company in weights of from about 0.2 to about 2.0 ounces per square yard (6,74 to about 67,4 g/m²). A paper having a weight of about 0.3 ounces per yard (10,1 g/m²) has been found satisfactory for use in the facesheet 10.

The use of the graphite paper 14 in combination with the open weave graphite cloth 12 is critical to attaining the improved stiffness and reduced weight required for the facesheet 10. After the open weave structure of the graphite cloth 12 was determined to be operable for use in attaining of the desired stiffening, it was found that such an open weave cloth cannot be bonded directly to the honeycomb in a satisfactory manner.

Fig. 2 illustrates the relative scale of the spacing of the fibers 16 in the fiber sets 18 that make up the graphite cloth 12, in respect to an open end 20 of a honeycomb 22. As is apparent, the scale of each cell 24 of the honeycomb 22 in relation to the scale of the spacing between the fibers 16 is very great. Consequently, only a small length of each fiber 16 could be expected to contact a portion of a wall 26 of the cell 24 and be bonded thereto, in a series of spaced-apart contact points. This low degree of bonding leads to pure mechanical performance of the honeycomb and facesheet composite, because loads cannot be readily transferred between the two elements of the composite.

The graphite paper 14, interposed between the graphite cloth 12 and the open end 20 of the honeycomb 22, acts to distribute loads transferred between the cloth 12 and the honeycomb 22. The paper 14 is bonded to the exposed portion of the cell walls 26 essentially along their entire length, achieving a more effective transfer of loads than can be achieved by spaced-apart point contacts as were the case if the cloth 12 were directly bonded on the cell walls 26 (GB-A-1 311 202) or bonded to the cell walls 26 over individual fillets (EP-A-0 136 096).

The graphite paper 14 also contacts the fibers 16 of the graphite cloth 12 over substantially their entire lengths, again promoting an effective load transfer between the paper 14 and the cloth 12. The graphite paper 14 is therefore an important structural, load transferring element of the facesheet 10. The graphite paper 14 prevents the sharp edges of the cell walls 26 of the honeycomb 22 from cutting, nicking, or otherwise damaging the fibers 16. The strength of the fibers 16 can be drastically reduced by even small amounts of damage, and the paper 14 between the fibers 16 and the honeycomb 22 prevents such damage. Being fabricated of graphite, the paper 14 is chemically compatible with the graphite cloth 12, has about the same local efficient of thermal expansion to reduce thermal mismatch stresses and strains upon heating and cooling, and has the same low density.

The graphite paper 14 also performs an important function in supporting the graphite cloth 12 during manufacturing and handling. An open weave structure is susceptible to shifting of the individual fibers 16 of the weave, whereby the fibers 16 would become misaligned or even might fray away from the body of the cloth 12 at the edges. The presence of the graphite paper 14 reduces shifting and fraying as the facesheet 10 is manufactured, and as the facesheet 10 is handled during application to the honeycomb 22.

During manufacture of the facesheet material, the graphite cloth 12 and the graphite paper 14 are impregnated with a suitable adhesive, preferably a curable epoxy, polysulfide, or polyimide resin. The epoxy resin adhesive is supplied as a viscous liquid that is impregnated into the facesheet 10. The adhesive helps to adhere the cloth 12 to the paper 14 to prevent shifting of the fibers 16 during manufacture, transport and application to the honeycomb 22, since the adhesive has some tackiness even before curing. After the facesheet 10 is applied to the honeycomb 22, the adhesive is cured under conditions proper to the adhesive chosen, to form a strong bond between the facesheet 10 and the honeycomb 22.

The strength of the bonding increases with increasing amounts of adhesive, but the weight also increases, as can be drastically demonstrated with respect to EP-A-0 136 096. It is preferred to use an adhesive that is sufficiently viscous to have a low flow rate at ambient and curing temperatures, to prevent the resin from flowing into the cells 24 of the honecomb 22. FIBERITE 984 (FIBERITE is a registered trade mark of the FIBERITE Company) durable epoxy resin adhesive has been found to be satisfactory for this application. The adhesive is impregnated into facesheet 10 in an amount of about 2.4 to about 2.6 ounces per square yard (80,9 to about 87,6 g/m$^2$) during manufacture of the facesheet 10 as a separate material from the honeycomb 22. Release paper 28 is normally incorporated during facesheet impregnation to prevent adhesive contact of the facesheet material to itself as the material is rolled up during manufacture. This protects the facesheet 10 during transfer and storage before the facesheet 10 is applied to the honeycomb 22.

Later, the stiffened honeycomb 22, illustrated in Fig. 3, is manufactured by stripping away the release film 28 and then placing the facesheet 10 onto the open end of the honeycomb 22, with the graphite paper 10 disposed downwardly against the honeycomb 22. The adhesive is cured using standard procedures applicable to that adhesive, to bond the facesheet 10 together and to the honeycomb 22. In the case of the preferred FIBERITE 984 adhesive, curing is accomplished by vacuum bagging the facesheet 10 and honeycomb 22 and curing at a temperature of 350°F (177°C) and a pressure of about 2 to about 5 pounds per square inch (0,138 to about 0,345 bar), for a period of about two hours. This process is termed cocuring, since the adhesive that forms the bond between the facesheet 10 and the honeycomb 22 is part of the adhesive that was impregnated into the facesheet 10.

In an alternative process termed precuring, the epoxy in the facesheet 10 is fully cured prior to joining the facesheet 10 to the honeycomb 22. Another layer of adhesive is placed between the precured facesheet 10 and the honeycomb 22, and the layer of adhesive is cured using procedures proper for it. This approach has an advantage of applying a higher concentration of adhesive at the bond plane between the facesheet 10 and the honeycomb 22, if it is found in particular applications that there is insufficient bonding using the cocuring approach. The amount of adhesive initially impregnated into the facesheet 10 can be reduced as needed when practicing the precuring approach, so that the total amount of adhesive used is that required to bond the elements together effectively.

In either approach (precure or cocure), the facesheet material can be prepared as one-, two-, or multi-ply layers of facesheet material 10 ready for application to the honeycomb 22. More than one of these layers are applied to the honeycomb 22 if increased stiffening is required. That is, there can be a number of plies bonded to the honeycomb 22 in one bonding operation. Extra layers of adhesive can be added as needed, so that the process is highly flexible and can be tailored to specific needs for particular applications.

A number of test samples were prepared in the manner just described. One, two, or three layers of the facesheet prepreg were bonded to each side of 1/2 inch (12,7 mm) thick pieces of honeycomb 22 having a 3/8 inch (9,53 mm) cell dimension and walls fabricated of 5056 aluminum alloy. Graphite doublers were bonded to the grip portions of each sample to ensure failure within the central portion. The product of the flexural modulus and the facesheet sheet thickness, Et, was measured in each case in the four-point bending. The strength of the facesheets 10 was also determined.

For a single layer of facesheet 10 on each side of the honeycomb 22, the average value of Et was 22,189 pounds per inch of width (3,883 N/mm) and the average strength was 19.6 pounds per inch of width (3,43 N/mm), with the values averaged over 45 tests. For two layers of facesheet 10 on each side of the honeycomb 22, the average value of Et was 42,192 pounds per inch (7,384 N/mm) and the average strength was 56.2 pounds per inch (9,84 N/mm) with the values averaged over 18 tests. For three layers of facesheet 10 on each side of the honeycomb 22, the average value of Et was 74,004 pounds per inch (12,951 N/mm) and the average value of strength was 60.3 pounds per inch (10,6 N/mm) with the values averaged over 13 tests. For comparison, the average Et value for a single layer of KEVLAR bonded to the honeycomb is about 16,000 pounds per inch (2,800 N/mm), singnificantly below the 22,189 pounds per square inch (3,883 N/mm) average of the material of the present invention. Strength values for the KEVLAR material are superior to those of the present material, but the critical consideration in the present application is stiffness, not strength.

Thermal expansion and thermal cycling tests were conducted to determine whether the honeycomb 22 stiffened with the facesheet 10 of the invention is acceptable for use in spacecraft solar panels, which are cycled many times during their lifetimes. The thermal testing confirmed that the present material has acceptable performance for use in spacecraft.

The facesheet and facesheet/honeycomb materials of the present invention provide increased stiffness and acceptable strength in spacecraft applications, with decreased weight. Although a particular embodiment of the invention has been described in detail for purposes of illustration, various modifications may be made without departing from the scope of the appended claims.

## Claims

1. A honeycomb facesheet material, comprising :
   – a woven graphite cloth (12) having interwoven graphite fibers (16) of an average spacing between fibers (16) of at least the diameter of the fibers (16) ; and
   – a sheet adhered to said cloth (12), said cloth (12) and said sheet being impregnated with a curable adhesive, characterized in that said sheet consists of a graphite paper (14) and that said adhesive is distributed over said cloth (12) and said graphite paper (14) in a quantity of between 80,9 and 87,6 $g/m^2$.

2. The facesheet material of claim 1, characterized in that said fibers (16) have a modulus of elasticity of from about 483-552 $kN/mm^2$.

3. The facesheet material of claim 1 or 2, characterized in that each of said fibers (16) comprises a plurality of filaments of graphite.

4. The facesheet material of any of claims 1 through 3, characterized in that the diameter of said fibers (16) is about 0,508 mm and the spacing between said fibers (16) is about 2,03 mm.

5. The facesheet material of any of claims 1 through 4, characterized in that the weight of said graphite paper (14) is from about 6,74 to about 67,4 $g/m^2$.

6. The facesheet material of claim 5, characterized in that the weight of said graphite paper 14 is about 10,1 $g/m^2$.

7. The facesheet material of any of claims 1 through 6, characterized in that that curable adhesive is selected from the group consisting of an epoxy resin adhesive, a polyimide adhesive, and a polysulfone adhesive.

8. A method of manufacturing a honeycomb facesheet material, comprising the steps of :
   – placing a woven graphite cloth (12) having about four fibers (16) per cm in each direction perpendicular to said fibers (16) in the plane of said cloth (12), the modulus of elasticity of said fibers (16) being from about 483-552 $kN/mm^2$, on a layer of graphite paper (14) having a weight of about 10,1 $g/m^2$ ;
   – impregnating said graphite paper (14) and said graphite cloth (12) placed thereon with an epoxy resin in a quantity of between 80,9 and 87,6 $g/m^2$ ; and
   – curing said epoxy resin at a temperature of 177°C and a pressure of about between 0,138 and 0,345 bar for a period of about 2 hours to generate a composite facesheet (10).

9. A stiffened honeycomb material, comprising
   – a piece of metallic honeycomb material (22) ;
   – a sheet bonded to one face of said honeycomb material (22) ; and
   – a woven graphite cloth (12) having woven graphite fibers (16) of an average spacing between fibers (16) of at least of the diameter of said fibers (16), said cloth (12) being bonded to said sheet by means of an adhesive, characterized in that said sheet consists of a graphite paper (14) and that said adhesive is distributed over said cloth (12) and said graphite paper (14) in a quantity of between 80,9 and 87,6 $g/m^2$.

10. The stiffened honeycomb material of claim 9, characterized in that said fibers (16) have a modulus of elasticity of about 483 $kN/mm^2$.

11. The stiffened honeycomb material of claim 9 or 10, characterized in that each of said fibers (16) comprises a plurality of filaments of graphite.

12. The stiffened honeycomb material of any of claims 9 through 11, characterized in that the spacing between fibers (16) is about 2,03 mm.

13. The stiffened honeycomb material of any of claims 9 through 12, characterized in that the weight of the graphite paper (14) is from about 6,74 to about 67,4 $g/m^2$.

14. The stiffened honeycomb material of claim 13, characterized in that the weight of the graphite paper (14) is about 10,1 $g/m^2$.

15. The stiffened honeycomb material of any of claims 9 through 14, characterized in that a plurality of pieces of graphite paper (14) and a plurality of graphite cloths (12) are bonded to a single honeycomb material (22).

16. The stiffened honeycomb material of claim 15, characterized in that a piece of graphite paper (14) is bonded to each face of said honeycomb (22), and a piece of graphite cloth (12) is bonded to the exposed face of each piece of graphite paper (14).

17. A method of manufacturing a stiffened honeycomb material, comprising the steps of :
– placing a woven graphite cloth (12) having about four fibers (16) per cm in each direction perpendicular to said fibers (16) in the plane of said cloth (12), the modulus of elasticity of said fibers (16) being from about 483-552 kN/mm² , on a layer of graphite paper (14) having a weight of about 10,1 g/m² ;
– impregnating said graphite paper (14) and said graphite cloth (12) placed thereon with an epoxy resin in a quantity of between 80,9 and 87,6 g/m² ;
– curing said epoxy resin at a temperature of 177°C and a pressure of between about 0,138 and 0,345 bar for a period of about 2 hours to generate a composite facesheet (10) ;
– placing a layer of adhesive between the cured facesheet (10) and exposed portions of cell walls (26) of a honeycomb material (22) ;
– joining the facesheet (10) to the honeycomb material (22) ; and
– curing the adhesive.

18. A method of manufacturing a stiffened honeycomb material, comprising the steps of :
– placing a woven graphite cloth (12) having about four fibers (16) per cm in each direction perpendicular to said fibers (16) in the plane of said cloth (12), the modulus of elasticity of said fibers (16) being from about 483-552 kN/mm² , and a layer of graphite paper (14) having a weight of about 10,1 g/m² on exposed portions of cell walls (26) of a honeycomb material (22) ;
– impregnating said graphite paper (14) and said graphite cloth (12) placed thereon with an epoxy resin in a quantity of between 80,9 and 87,6 g/m² ; and
– curing said epoxy resin at a temperature of 177°C and a pressure of between about 0,138 and 0,345 bar for a period of about 2 hours to bond the cloth (12) and the paper (13) together as a composite facesheet (10) and to simultaneously bond the facesheet to the exposed portion of the cell walls essentially along their entire length.

## Ansprüche

1. Abdeck-Flachmaterial in Honigwabenstruktur, mit :
– einem gewebten Graphit-Tuch (12) mit verwobenen Graphit-Fasern (16), wobei zwischen den Fasern (16) ein Abstand besteht, der mindestens dem Durchmesser der Fasern (16) entspricht ; und
– einem an dem Tuch (12) haftenden Flachmaterial, wobei das Tuch (12) und das Flachmaterial mit einem aushärtbaren Klebstoff getränkt sind, dadurch gekennzeichnet, daß das Flachmaterial aus einem Graphit-Papier (14) besteht, und daß der Klebstoff über das Tuch (12) und das Graphit-Papier (14) in einer Menge zwischen 80,9 und 87,6 g/m² verteilt ist.

2. Flachmaterial nach Anspruch 1, dadurch gekennzeichnet, daß die Fasern (16) einen Elastizitätsmodul von etwa 483-552 kN/mm² haben.

3. Flachmaterial nach Anspruch 1 oder 2, dadurch gekennzeichnet, daß jede der Fasern (16) eine Mehrzahl von Graphit-Filamenten umfaßt.

4. Flachmaterial nach einem der Ansprüche 1 bis 3, dadurch gekennzeichnet, daß der Durchmesser der Fasern (16) ungefähr 0,508 mm und der Abstand zwischen den Fasern (16) ungefähr 2,03 mm beträgt.

5. Flachmaterial nach einem der Ansprüche 1 bis 4, dadurch gekennzeichnet, daß das Gewicht des Graphit-Papiers (14) etwa zwischen 6,74 und 67,4 g/m² liegt.

6. Flachmaterial nach Anspruch 5, dadurch gekennzeichnet, daß das Gewicht des Graphit-Papiers (14) ungefähr 10,1 g/m² beträgt.

7. Flachmaterial nach einem der Ansprüche 1 bis 6, dadurch gekennzeichnet, daß der aushärtbare Klebstoff aus einer Gruppe ausgewählt wird, die aus einem Epoxidharz-Klebstoff, einem Polyimid-Klebstoff und einem Polysulfon-Klebstoff besteht.

8. Verfahren zum Herstellen eines Abdeck-Flachmaterials in Honigwabenstruktur, umfassend die Verfahrensschritte :
– Auflegen eines gewebten Graphit-Tuchs (12) mit ungefähr vier Fasern (16) pro Zentimetern in jeder Richtung senkrecht zu den Fasern (16) in der Ebene des Tuchs (12), wobei der Elastizitätsmodul der Fasern (16) im Bereich von 483-552 kN/mm² liegt, auf eine Lage von Graphit-Papier (14) mit einem Gewicht von ungefähr 10,1 g/m² ;
– Tränken des Graphit-Papiers (14) und des darauf aufgelegten Graphit-Tuchs (12) mit einem Epoxidharz in einer Menge zwischen 80,9 und 87,6 g/m² ; und

– Aushärten des Epoxidharzes bei einer Temperatur von 177°C und einem Druck von ungefähr zwischen 0,138 und 0,345 bar für einen Zeitraum von ungefähr 2 Stunden, zum Erzeugen eines zusammengesetzten Flachmaterials (10).

9. Ausgesteiftes Material in Honigwabenstruktur, umfassend :

– Ein Stück eines metallischen Materials (22) in Honigwabenstruktur ;

– ein Flachmaterial, das mit einer Oberfläche des Materials (22) in Honigwabenstruktur verbunden ist ; und

– ein gewebtes Graphit-Tuch (12) mit gewebten Graphit-Fasern (16), die einen mittleren Abstand zwischen den Fasern (16) aufweisen, der mindestens gleich dem Durchmesser der Fasern (16) entspricht, wobei das Tuch (12) mit dem Flachmaterial mittels eines Klebstoffs verbunden ist, dadurch gekennzeichnet, daß das Flachmaterial aus einem Graphit-Papier (14) besteht, und daß der Klebstoff über das Tuch (12) und das Graphit-Papier (14) in einer Menge von 80,9 bis 87,6 g/m² verteilt ist.

10. Ausgesteiftes Material in Honigwabenstruktur nach Anspruch 9, dadurch gekennzeichnet, daß die Fasern (16) einen Elastizitätsmodul von ungefähr 483 kN/mm² aufweisen.

11. Ausgesteiftes Material in Honigwabenstruktur nach Anspruch 9 oder 10, dadurch gekennzeichnet, daß jede der Fasern (16) eine Mehrzahl von Graphit-Filamenten umfaßt.

12. Ausgesteiftes Material in Honigwabenstruktur nach einem der Ansprüche 9 bis 11, dadurch gekennzeichnet, daß der Abstand zwischen den Fasern (16) ungefähr 2,03 mm beträgt.

13. Ausgesteiftes Material in Honigwabenstruktur nach einem der Ansprüche 9 bis 12, dadurch gekennzeichnet, daß das Gewicht des Graphit-Papiers (14) zwischen 6,74 und 67,4 g/m² liegt.

14. Ausgesteiftes Material in Honigwabenstruktur nach Anspruch 13, dadurch gekennzeichnet, daß das Gewicht des Graphit-Papiers (14) ungefähr 10,1 g/m² beträgt.

15. Ausgesteiftes Material in Honigwabenstruktur nach einem der Ansprüche 9 bis 14, dadurch gekennzeichnet, daß eine Mehrzahl von Stücken Graphit-Papier (14) und eine Mehrzahl von Graphit-Tüchern (12) zu einem einzigen Material (22) in Honigwabenstruktur verbunden sind.

16. Ausgesteiftes Material in Honigwabenstruktur nach Anspruch 15, dadurch gekennzeichnet, daß das Stück Graphit-Papier (14) mit jeder Oberfläche der Honigwabenstruktur (22) verbunden ist, und daß ein Stück Graphit-Tuch (12) mit der äußeren Oberfläche jedes Stücks Graphit-Papier (14) verbunden ist.

17. Verfahren zum Herstellen eines ausgesteiften Materials in Honigwabenstruktur, mit den Verfahrensschritten :

– Auflegen eines gewebten Graphit-Tuchs (12) mit ungefähr vier Fasern (16) pro Zentimetern in jeder Richtung senkrecht zu den Fasern (16) in der Ebene des Tuchs (12), wobei der Elastizitätsmodul der Fasern (16) ungefähr im Bereich von 483-552 kN/mm² liegt, auf eine Lage von Graphit-Papier (14) mit einem Gewicht von ungefähr 10,1 g/m² ;

– Tränken des Graphit-Papiers (14) und des darauf aufgelegten Graphit-Tuchs (12) mit einem Epoxidhard in einner Menge zwischen 80,9 und 87,6 g/m² ;

– Aushärten des Epoxidharzes bei einer Temperatur von 177°C und einem Druck im Bereich zwischen ungefähr 0,138 und 0,345 bar für eine Zeitdauer von etwa 2 Stunden zum Erzeugen eines zusammengesetzten Abdeck-Flachmaterials (10) ;

– Aufbringen einer Lage von Klebstoff zwischen das ausgehärtete Abdeck-Flachmaterial (10) und äußere Abschnitte von Zellwänden (26) eines Materials (22) in Honigwaben-Struktur ;

– Zusammenfügen des Abdeck-Flachmaterials (10) und des Materials (22) in Honigwabenstruktur ; und

– Aushärten des Klebstoffs.

18. Verfahren zum Herstellen eines ausgesteiften Materials in Honigwabenstruktur, mit den Verfahrensschritten : .

– Auflegen eines gewebten Graphit-Tuchs (12) mit ungefähr vier Fasern (16) pro Zentimeter in jeder Richtung senkrecht zu den Fasern (16) in der Ebene des Tuchs (12), wobei der Elastizitätsmodul der Fasern (16) im Bereich von 483-552 kN/mm² liegt, und einer Lage von Graphit-Papier (14) mit einem Gewicht von ungefähr 10,1 g/m² auf äußere Abschnitte von Zellwänden (26) eines Materials (22) in Honigwabenstruktur;

– Tränken des Graphit-Papiers (14) und des darauf aufgelegten Graphit-Tuchs (12) mit einem Epoxidharz in einer Menge von zwischen 80,9 und 87,6 g/m² ; und

– Aushärten des Epoxidharzes bei einer Temperatur von 177°C und einem Druck von zwischen ungefähr 0,138 und 0,345 bar für eine Zeitdauer von ungefähr 2 Stunden, um das Tuch (12) und das Papier (13) miteinander als zusammengesetztes Abdeck-Flachmaterial (10) zu verbinden und zugleich das Abdeck-Flachmaterial mit den äußeren Abschnitten der Zellwände im wesentlichen entlang deren gesamter Länge zu verbinden.

**Revendications**

1. Matière de feuille de revêtement en nid d'abeilles, comportant :
   - une étoffe tissée (12) en graphite ayant des fibres entrelacées (16) de graphite d'un espacement moyen entre les fibres (16) d'au moins le diamètre des fibres (16) ; et
   - une feuille collée à ladite étoffe (12), ladite étoffe (12) et ladite feuille étant imprégnées d'un adhésif durcissable, caractérisée en ce que ladite feuille est constituée d'un papier graphité (14) et en ce que ledit adhésif est réparti sur ladite étoffe (12) et ledit papier graphité (14) en quantité comprise entre 80, 9 et 87, 6 g/m².

2. Matière de feuille de revêtement selon la revendication 1, caractérisée en ce que lesdites fibres (16) ont un module d'élasticité d'environ 483 à 552 kN/mm².

3. Matière de feuille de revêtement selon la revendication 1 ou 2, caractérisée en ce que chacune desdites fibres (16) comprend plusieurs filaments de graphite.

4. Matière de feuille de revêtement selon l'une quelconque des revendications 1 à 3, caractérisée en ce que le diamètre desdites fibres (16) est d'environ 0,508 mm et l'espacement entre lesdites fibres (16) est d'environ 2,03 mm.

5. Matière de feuille de revêtement selon l'une quelconque des revendications 1 à 4, caractérisée en ce que le poids dudit papier graphité (14) est d'environ 6,74 à environ 67,4 g/m².

6. Matière de feuille de revêtement selon la revendication 5, caractérisée en ce que le poids dudit papier graphité (14) est d'environ 10,1 g/m².

7. Matière de feuille de revêtement selon l'une quelconque des revendications 1 à 6, caractérisée en ce que l'adhésif durcissable est choisi dans le groupe constitué d'un adhésif à résine époxy, d'un adhésif du type polyimide et d'un adhésif du type polysulfone.

8. Procédé de fabrication d'une matière de feuille de revêtement en nid d'abeilles, comportant les étapes qui consistent :
   - à placer l'étoffe tissée (12) de graphite ayant environ quatre fibres (16) par cm dans chaque direction perpendiculaire auxdites fibres (16) dans le plan de ladite étoffe (12), le module d'élasticité desdites fibres (16) étant compris entre environ 483 et 552 kN/mm², sur une couche de papier graphité (14) ayant un poids d'environ 10,1 g/m² ;
   - à imprégner ledit papier graphité (14) et ladite étoffe (12) de graphite placée sur lui d'une résine époxy en quantité comprise entre 80,9 et 87,6 g/m² ; et
   - à faire durcir ladite résine époxy a une température de 177°C et une pression comprise entre environ 0,138 et 0,345 bar pendant une période d'environ 2 heures pour générer une feuille de revêtement composite (10).

9. Matière en nid d'abeilles renforcée, comportant :
   - une pièce de matière métallique (22) en nid d'abeilles ;
   - une feuille liée à une face de ladite matière (22) en nid d'abeilles ; et
   - une étoffe tissée (12) de graphite ayant des fibres tissées (16) de graphite d'un espacement moyen entre fibres (16) d'au moins le diamètre desdites fibres (16), ladite étoffe (12) étant liée à ladite feuille au moyen d'un adhésif, caractérisée en ce que ladite feuille est constituée d'un papier graphité (14) et en ce que ledit adhésif est distribué sur ladite étoffe (12) et ledit papier graphité (14) en quantité comprise entre 80,9 et 87,6 g/m².

10. Matière en nid d'abeilles renforcée selon la revendication 9, caractérisée en ce que lesdites fibres (16) ont un module d'élasticité d'environ 483 kN/mm².

11. Matière en nid d'abeilles renforcée selon la revendication 9 ou 10, caractérisée en ce que chacune desdites fibres (16) comprend plusieurs filaments de graphite.

12. Matière en nid d'abeilles renforcée selon l'une quelconque des revendications 9 à 11, caractérisée en ce que l'espacement entre fibres (16) est d'environ 2,03 mm.

13. Matière en nid d'abeilles renforcée selon l'une quelconque des revendications 9 à 12, caractérisée en ce que le poids du papier graphité (14) est d'environ 6,74 à environ 67,4 g/m².

14. Matière en nid d'abeilles renforcée selon la revendication 13, caractérisée en ce que le poids du papier graphité (14) est d'environ 10,1 g/m².

15. Matière en nid d'abeilles renforcée selon l'une quelconque des revendications 9 à 14, caractérisée en ce que plusieurs pièces de papier graphité (14) et plusieurs étoffes (12) de graphite sont liées à une matière unique (22) en nid d'abeilles.

16. Matière en nid d'abeilles renforcée selon la revendication 15, caractérisée en ce qu'une pièce de papier graphité (14) est liée à chaque face dudit nid d'abeilles (22), et une pièce d'étoffe de graphite (12) est liée à la face exposée de chaque pièce de papier graphité (14).

17. Procédé de fabrication d'une matière en nid d'abeilles renforcée, comportant les étapes qui consistent:
– à placer une étoffe tissée (12) de graphite ayant environ quatre fibres (16) par cm dans chaque direction perpendiculaire auxdites fibres (16) dans le plan de ladite étoffe (12), le module d'élasticité desdites fibres (16) étant compris entre environ 483 et 552 kN/mm², sur une couche de papier graphité (14) ayant un poids d'environ 10,1 g/m² ;
– à imprégner ledit papier graphité (14) et ladite étoffe (12) de graphite placée sur lui d'une résine époxy en quantité comprise entre 80,9 et 87,6 g/m² ;
– à faire durcir ladite résine époxy à une température de 177°C et une pression comprise entre environ 0,138 et 0,345 bar pendant une période d'environ 2 heures pour générer une feuille de revêtement composite (10) ;
– à placer une couche d'adhésif entre la feuille de revêtement durcie (10) et des parties exposées de parois (26) de cellules d'une matière en nid d'abeilles (22) ;
– à joindre la feuille de revêtement (10) à la matière en nid d'abeilles (22) ; et
– à faire durcir l'adhésif.

18. Procédé de fabrication d'une matière en nid d'abeilles renforcée, comportant les étapes qui consistent:
– à placer une étoffe tissée (12) de graphite ayant environ quatre fibres (16) par cm dans chaque direction perpendiculaire auxdites fibres (16) dans le plan de ladite étoffe (12), le module d'élasticité desdites fibres (16) étant compris entre environ 483 et 552 kN/mm², sur une couche de papier graphité (14) ayant un poids d'environ 10,1 g/m², sur des parties exposées de parois (26) de cellules d'une matière en nid d'abeilles (22) ;
– à imprégner ledit papier graphité (14) et ladite étoffe de graphite (12) placée sur lui d'une résine époxy en une quantité comprise entre 80,9 et 87,6 g/m² ; et
– à faire durcir ladite résine époxy à une température de 177°C et une pression comprise entre environ 0,138 et 0,345 bar pendant une période d'environ 2 heures pour lier l'étoffe (12) et le papier (13) ensemble en une feuille de revêtement composite (10) et pour lier simultanément la feuille de revêtement à la partie exposée des parois de cellules essentiellement sur toute leur longueur.

FIG.1

FIG.2

FIG.3